# EUROPEAN PATENT APPLICATION

(11) **EP 4 765 237 A1**
(43) Date of publication of application: **24.06.2026**
(21) Application number: 24927314.5
(22) Date of filing: 26.02.2024
(51) Int. Cl.: H01M 4/139, H01M 4/13, H01M 4/62

(54) **LITHIUM ION BATTERY AND LITHIUM ION BATTERY MANUFACTURING METHOD**

(71) Applicant: Nash Energy (I) Private Limited, Bangalore, Karnataka 560022 (IN); Nash Energy Japan G.K., Hanamaki-shi, Iwate 025-0312 (JP)
(72) Inventor: HORIGOME, Masataka, Hanamaki-shi Chintai Plant, 6-38, 5th-Chiwari, Nimaibashi, Hanamaki-Shi, Iwate 025-0312 (JP)
(74) Representative: Plougmann Vingtoft a/s
(86) International application number: PCT/JP2024/006800
(87) International publication number: WO 2025/181860

(57) **Abstract**

A lithium ion battery manufacturing method comprising: a step for forming a PGLYD polymer imparted with adhesiveness by forming a urethane bond on a PGLYD polymer; a step for forming a positive electrode containing lithium, iron, phosphorus, and amorphous carbon; a step for forming a negative electrode containing graphite and amorphous carbon; and a step for placing the positive electrode, the negative electrode, and a predetermined electrolyte in a predetermined container and sealing the container, wherein at least one of the positive electrode and the negative electrode comprises the PGLYD polymer imparted with adhesiveness as a binder.

## Description

### TECHNICAL FIELD

The present invention relates to a lithium ion battery and a method for manufacturing the lithium ion battery.

### BACKGROUND OF THE INVENTION

Lithium ion batteries are known for their high energy density, rapid charge and discharge capabilities, and long expected lifespan. It is also known that lithium ion batteries can be constructed using various materials, such as ternary lithium ion batteries that utilize nickel, manganese, and cobalt as cathode material, and lithium iron phosphate ion batteries that utilize lithium iron phosphate (LFP: LiFePO₄) as the cathode material (for example, see Patent Document 1).

### PRIOR ART

### PATENT DOCUMENT

[Patent Document 1] Japanese Unexamined Patent Application Publication No. 2017-212045

### SUMMARY OF INVENTION

### PROBLEMS TO BE SOLVED BY THE INVENTION

In lithium ion batteries, PVDF (Poly Vinylidene Difluoride) or the like is used as a binder for electrodes from the viewpoints of mechanical properties, chemical stability, and adhesive properties. However, PVDF has poor ionic conductivity and electronic conductivity, and it has been considered to add thereto a material or the like having high ionic conductivity and electronic conductivity. Accordingly, a binder having high ionic conductivity and electronic conductivity while also having mechanical properties, chemical stability, and adhesive properties has been desired.

The present invention has been made in view of these points, and an object of the present invention is to increase ionic conductivity and electronic conductivity of a binder used in a lithium ion battery.

### MEANS FOR SOLVING THE PROBLEM

A first aspect of the present invention provides a method for manufacturing a lithium ion battery including the steps of: forming a polyglycidol (PGLYD) polymer imparted with adhesiveness by forming urethane bonds in a PGLYD polymer; forming a cathode that includes (i) a cathode active material and (ii) amorphous carbon or carbon fibers; forming an anode that includes (i) an anode active material and (ii) amorphous carbon or carbon fibers; and enclosing the cathode, the anode, and a predetermined electrolyte in a predetermined container and hermetically sealing the container, wherein at least one of the cathode or the anode includes, as a binder, the PGLYD polymer imparted with adhesiveness.

The forming the cathode may include: forming the cathode by applying to a substrate a cathode slurry containing cathode material that includes (i) a cathode active material, (ii) amorphous carbon or carbon fibers, and (iii) the PGLYD polymer imparted with adhesiveness, and drying the cathode slurry, and the cathode material includes 1 wt % or more and 50 wt % or less of the PGLYD polymer.

The forming the anode may include: forming the anode by applying to a substrate an anode slurry containing anode material that includes (i) an anode active material, (ii) amorphous carbon or carbon fibers, and (iii) the PGLYD polymer imparted with adhesiveness, and drying the anode slurry, and the anode material may include 1 wt % or more and 50 wt % or less of the PGLYD polymer.

A second aspect of the present invention provides a lithium ion battery including: a cathode that includes (i) a cathode material and (ii) amorphous carbon or carbon fibers; an anode that includes (i) an anode active material and (ii) amorphous carbon or carbon fibers; and an electrolyte, wherein at least one of the cathode or the anode includes a PGLYD polymer imparted with adhesiveness through urethane bonding.

### EFFECT OF THE INVENTION

According to the present invention, the ionic conductivity and electronic conductivity of a binder used in a lithium ion battery can be increased.

### BRIEF DESCRIPTION OF THE DRAWINGS

FIG. 1 shows an example of a schematic configuration of a lithium iron phosphate ion battery 10 according to the present embodiment.
FIG. 2 shows a basic synthesis route for a PGLYD polymer.
FIG. 3 shows a synthesis route for a PGLYD polymer to which adhesiveness is imparted according to the present embodiment.
FIG. 4 shows the molecular structure of the PGLYD polymer imparted with adhesiveness.
FIG. 5 shows an example of a manufacturing flow of the lithium iron phosphate ion battery 10 according to the present embodiment.
FIG. 6 shows a configuration example of the lithium iron phosphate ion battery 10 according to the present embodiment.
FIG. 7 shows an example of an assembly flow of the lithium iron phosphate ion battery 10 according to the present embodiment.
FIG. 8 shows an example of charge-discharge characteristics of the lithium iron phosphate ion battery 10 according to the present embodiment.
FIG. 9 shows an example of the charge-discharge cycle characteristics of the lithium iron phosphate ion battery 10 according to the present embodiment.

### DETAILED DESCRIPTION OF THE INVENTION

### <Schematic configuration of a lithium iron phosphate ion battery 10>

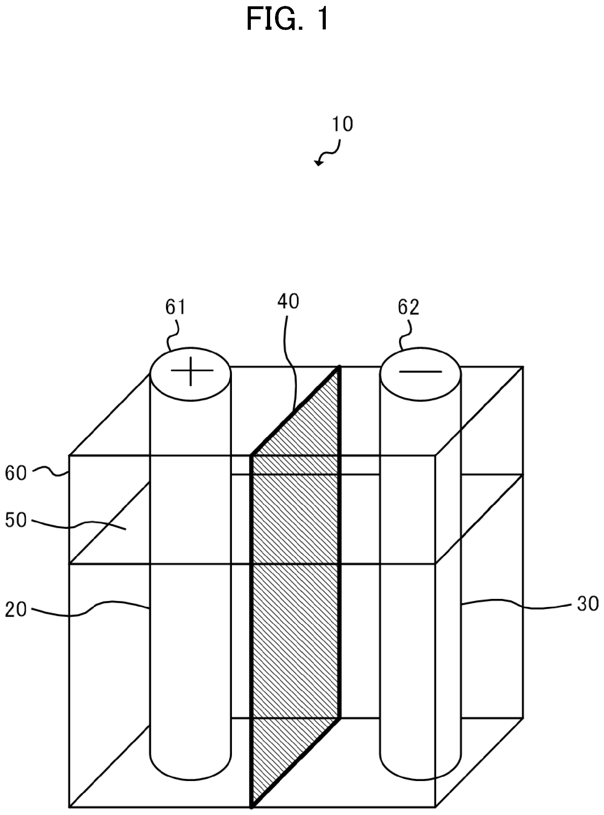

In this example, a lithium iron phosphate ion battery will be described as an example of a lithium ion battery. FIG. 1 shows an example of a schematic configuration of a lithium iron phosphate ion battery 10 according to the present embodiment. The lithium iron phosphate ion battery 10 is a rechargeable secondary battery. The lithium iron phosphate ion battery 10 includes a cathode 20, an anode 30, a separator 40, an electrolyte 50, and a housing 60.

The cathode 20 includes lithium, iron, phosphorus, and amorphous carbon. The active material of the cathode 20 is lithium iron phosphate. The cathode 20 is an electrode formed of, for example, lithium iron phosphate, amorphous carbon, and a binder, as cathode material. Here, amorphous carbon is a conductive additive such as Ketjenblack or acetylene black. The amorphous carbon may be carbon fibers. The conductive additive is a material used to reduce the resistance of the electrode when the electrode of the lithium ion battery is formed. The binder will be described later.

The anode 30 includes graphite and amorphous carbon. The active material of the anode 30 is graphite. The anode 30 is an electrode formed of, for example, amorphous carbon, a thickener such as CMC (Carboxymethyl Cellulose), or a binder, as anode material. The amorphous carbon may be carbon fibers. The binder will be described later.

The separator 40 allows lithium ions to move between the cathode 20 and the anode 30 while separating the cathode 20 and the anode 30. The separator 40 is, for example, a film having a thickness of about several ten µm and having a plurality of through holes of 1 µm or less. The separator 40 is formed of, for example, polyethylene, polypropylene, or the like.

The electrolyte 50 ionizes lithium into cations and anions, allowing ions to migrate. The electrolyte 50 is a solvent, a solution, a gel-like substance, or the like. The electrolyte 50 is, for example, an organic electrolytic solution in which approximately 1 mol of a lithium salt (LiPF₆, LiBF₄, LiClO₄, or the like) is dissolved in an organic solvent. Examples of the materials of the organic solvent include ethylene carbonate (EC), propylene carbonate (PC), dimethyl carbonate (DMC), diethyl carbonate (DEC), and ethyl methyl carbonate (EMC).

The housing 60 contains the cathode 20, the anode 30, the separator 40, and the electrolyte 50. The housing 60 is preferably a container that hermetically seals the cathode 20, the anode 30, the separator 40, and the electrolyte 50. The housing 60 includes a positive terminal 61 electrically connected to the cathode 20 and a negative terminal 62 electrically connected to the anode 30.

The lithium iron phosphate ion battery 10 is charged when a power source is connected to the positive terminal 61 and the negative terminal 62. When the lithium iron phosphate ion battery 10 is charged, electrons migrate from the cathode 20 to the anode 30, and lithium ions migrate through the electrolyte 50 from the cathode 20 and are accumulated in the anode 30, thereby generating a potential difference between the cathode 20 and the anode 30.

On the other hand, the lithium iron phosphate ion battery 10 discharges when a discharge circuit, such as a load, is connected to the positive terminal 61 and the negative terminal 62. When the lithium iron phosphate ion battery 10 is discharged, electrons flow from the anode 30 to the cathode 20 through the discharge circuit, and the lithium ions that had been accumulated in the anode 30 migrate to the cathode 20 through the electrolyte 50, and combine with the electrons in the cathode 20 to be reduced to lithium oxide.

In the lithium iron phosphate ion battery 10 according to the present embodiment, a PGLYD polymer having high ionic conductivity and high electronic conductivity is used as a binder of at least one of the cathode 20 or the anode 30. However, a conventional PGLYD polymer has poor mechanical properties and adhesiveness, making it difficult to use as a binder for the lithium iron phosphate ion battery 10.

Therefore, mechanical properties and adhesiveness were imparted to the PGLYD polymer by forming urethane bonds in the PGLYD polymer. The inventors have found that the PGLYD polymer imparted with adhesiveness in this manner functions as the binder having high ionic conductivity and high electronic conductivity while having mechanical properties, chemical stability, and adhesive properties.

### <PGLYD polymer>

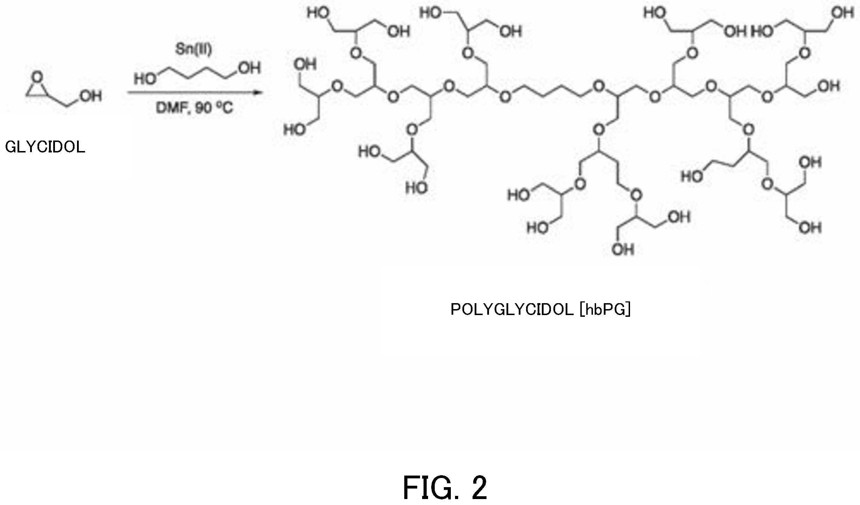

FIG. 2 shows the basic synthesis route for a PGLYD polymer. Glycidol is placed in a flask, and a nitrogen atmosphere is established. A starting-material amount of tetraethylene glycol, tin octylate as a catalyst, and DMF (dimethylformamide) are added to the flask, the mixture is stirred until a homogeneous mixture is obtained, and the resulting mixture is then heated to 90°C to carry out polymerization. The obtained polymerization solution is poured into acetone and the precipitate is washed with acetone and dried under reduced pressure, whereby a polymer (hbPG) is obtained. The PGLYD polymer synthesized by such a basic synthesis route has poor adhesiveness and cannot be used as a binder.

### <PGLYD polymer imparted with adhesiveness>

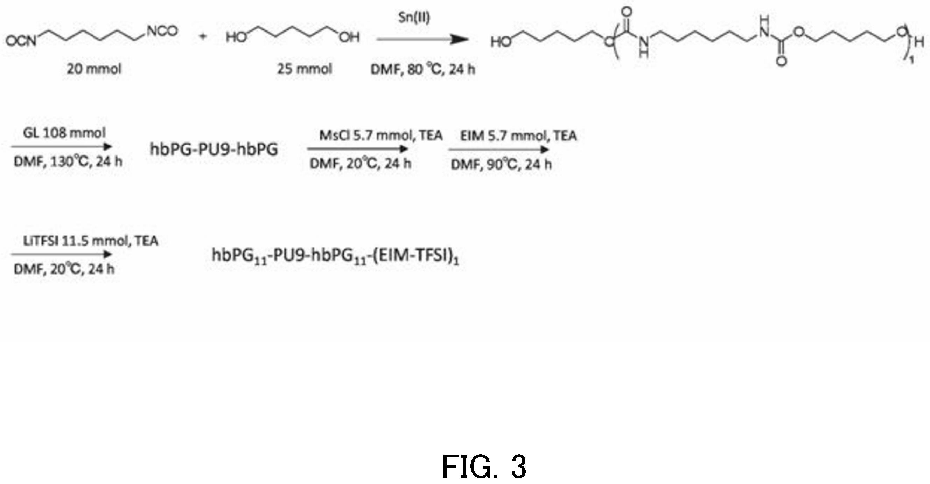

FIG. 3 shows a synthesis route for a PGLYD polymer imparted with adhesiveness according to the present embodiment. A predetermined amount of DMF, hexamethylene diisocyanate and pentanediol is placed in a flask, tin octylate as a catalyst is added thereto, followed by stirring at 80°C for 24 hours. Glycidol (GL) is added dropwise to the flask and polymerized at 130°C for 24 hours. The resulting solution is poured into acetone to obtain a polymer powder. The obtained polymer is dissolved in DMF, mesyl chloride and triethylamine are added thereto, followed by stirring at room temperature for 24 hours.

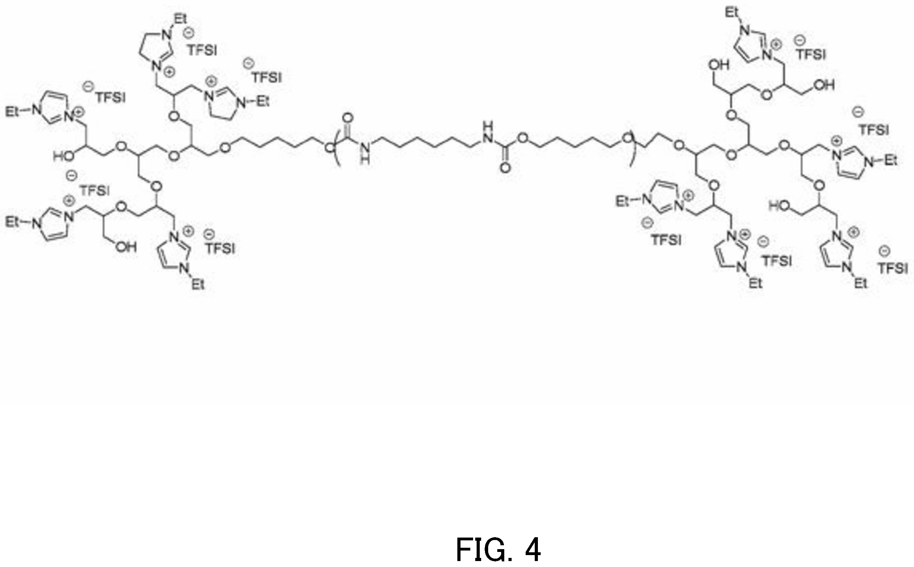

1-Methylimidazole is added to the solution obtained by stirring, and the mixture is maintained at 90°C for 24 hours. After the temperature is lowered to room temperature, LiTFSI (lithium bis(trifluoromethanesulfonyl)imide) is added. The obtained reaction solution is poured into acetone, subjected to decantation, and dried at 100°C, whereby a PGLYD polymer imparted with adhesiveness through urethane bonding is obtained. FIG. 4 shows the molecular structure of the PGLYD polymer imparted with adhesiveness.

The inventors have found that when a PGLYD polymer imparted with an appropriate amount of adhesiveness is used as a binder, the ionic conductivity and electronic conductivity of an electrode can be improved compared with a binder such as PVDF. As a result, a material having lower ionic conductivity or electronic conductivity can be used as the electrolyte 50. In other words, by using the PGLYD polymer imparted with adhesiveness as a binder, the options for the electrolyte 50 can be increased, thereby improving the design flexibility of the lithium iron phosphate ion battery 10. Next, a method for manufacturing such a lithium iron phosphate ion battery 10 will be described.

### <Manufacturing flow of the lithium iron phosphate ion battery 10>

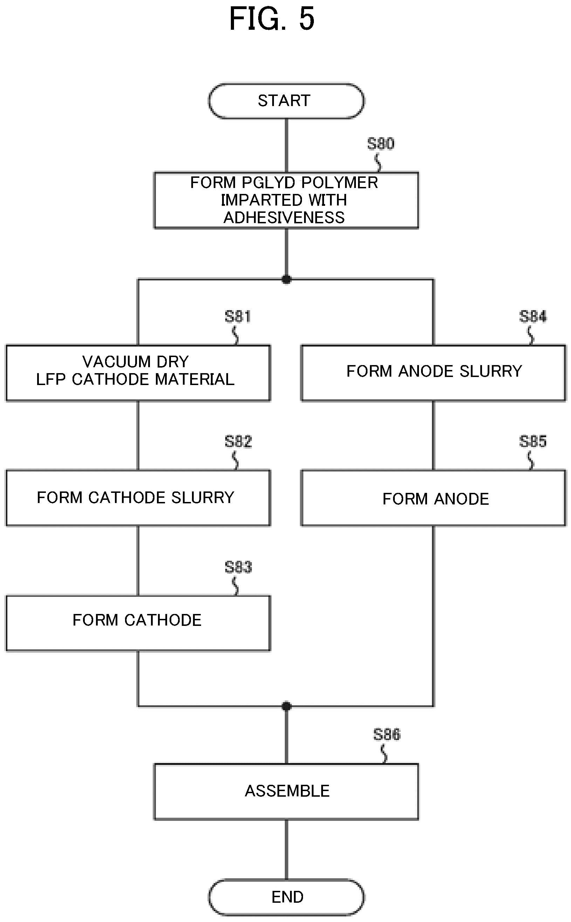

FIG. 5 shows an example of a manufacturing flow of the lithium iron phosphate ion battery 10 according to the present embodiment. In the present embodiment, a manufacturing flow of a coin-type battery having a diameter of about 13 mm will be described as an example of the lithium iron phosphate ion battery 10.

First, a PGLYD polymer to which adhesiveness is imparted is formed (S80). The PGLYD polymer imparted with adhesiveness can be formed by forming urethane bonds in the PGLYD polymer, as described above.

Next, the cathode 20 and the anode 30 are formed. The cathode 20 and the anode 30 are formed separately, for example. The cathode 20 and the anode 30 may be formed concurrently in time or may be formed at different times. For example, the anode 30 may be formed after the cathode 20, or alternatively, the cathode 20 may be formed after the anode 30. FIG. 5 shows an example in which the cathode 20 and the anode 30 are formed concurrently in time.

First, the formation of the cathode 20 including lithium, iron, phosphorus, and amorphous carbon will be described. As an example of the film composition of the cathode 20, the weight ratio of lithium iron phosphate, amorphous carbon, and the PGLYD polymer imparted with adhesiveness is 84:4:12. The amorphous carbon of the cathode material may be another conductive material. For example, the amorphous carbon of the cathode material is carbon fiber.

More specifically, first, the LFP cathode material of lithium, iron, and phosphorus is vacuum dried (S81). For example, the LFP cathode material is placed in a vacuum chamber or the like, and dried by evacuating the chamber with a vacuum pump and then maintaining the material at a temperature of about 200°C for approximately five hours.

Next, the PGLYD polymer imparted with adhesiveness is dissolved in a solvent such as NMP (N-methyl pyrolidone), and a predetermined amount is measured. The dried LFP cathode material and amorphous carbon are added to the weighed solution and stirred to form a cathode slurry (S82). Then, NMP is added to the cathode slurry and stirred so that the cathode slurry reaches a predetermined concentration. The predetermined concentration is, for example, a solid content of 55 wt %.

Next, the cathode 20 is formed (S83) by applying to a substrate a cathode slurry containing cathode material that includes lithium iron phosphate, amorphous carbon, and the PGLYD polymer imparted with adhesiveness, and drying the cathode slurry. The substrate is, for example, aluminum foil whose surface is coated with graphite. The film thickness of the graphite is, for example, approximately 1 µm, and the thickness of the aluminum foil is approximately 12 µm. It is preferable to apply only the predetermined amount of the cathode slurry to the substrate so as to form a predetermined dry film thickness. The predetermined dry film thickness is, for example, approximately 80 µm. The cathode slurry is preferably applied by a slot die coater or the like.

The applied cathode slurry is dried, for example, in air at a temperature of approximately 110°C for about 15 minutes to form a coating film of the cathode material having a dry film thickness. Then, the coating film of the cathode material is pressed and formed to a predetermined thickness. The predetermined thickness is, for example, approximately 70 µm. The cathode 20 is formed by cutting the coating film of the cathode material, having such a predetermined thickness, into a predetermined shape.

Next, the formation of the anode 30 including graphite and amorphous carbon will be described. As an example of the film composition of the anode 30, the weight ratio of graphite, amorphous carbon, CMC, and SBR is 94:2:2:2. The amorphous carbon is Ketjenblack, acetylene black, or the like. The amorphous carbon of the anode material may be another conductive material. For example, the amorphous carbon of the anode material is carbon fiber.

More specifically, first, an anode slurry is formed (S84). For example, a predetermined amount of graphite powder and a predetermined amount of amorphous carbon are added to an aqueous solution of CMC, and the resulting mixture is stirred. A predetermined amount of SBR solution is then added thereto and stirred to form the anode slurry. The aqueous solution of CMC contains, as one example, 2 wt% of CMC. Then, distilled water is added to the anode slurry and the resulting mixture is stirred so that the anode slurry reaches a predetermined concentration. The predetermined concentration is, for example, a solid content of 40 wt%.

Next, the anode 30 is formed by applying to the substrate an anode slurry containing anode material that includes graphite, amorphous carbon, and the PGLYD polymer imparted with adhesiveness, and drying the anode slurry (S85). The substrate is, for example, a copper foil whose surface is coated with carbon nanotubes. The film thickness of the carbon nanotubes is, for example, approximately 1 µm, and the thickness of the copper foil is approximately 6 µm. It is preferable to apply only the predetermined amount of the anode slurry to the substrate so as to form a predetermined dry film thickness. The predetermined dry film thickness is, for example, approximately 80 µm. The anode slurry is preferably applied by a slot die coater or the like.

The applied anode slurry is dried, for example, in air at a temperature of approximately 80°C for about 10 minutes to form a coating film of the anode material having a dry film thickness. Then, the coating film of the anode material is pressed and formed to a predetermined thickness. The predetermined thickness is, for example, approximately 60 µm. The anode 30 is formed by cutting the coating film of the anode material, having such a predetermined thickness, into a predetermined shape.

After the cathode 20 and the anode 30 are formed, the cathode 20, the anode 30, and the predetermined electrolyte 50 are enclosed in a predetermined container, and the container is hermetically sealed to assemble the lithium iron phosphate ion battery 10 (S86). Thus, the lithium iron phosphate ion battery 10 can be formed.

### <Configuration example of the lithium iron phosphate ion battery 10>

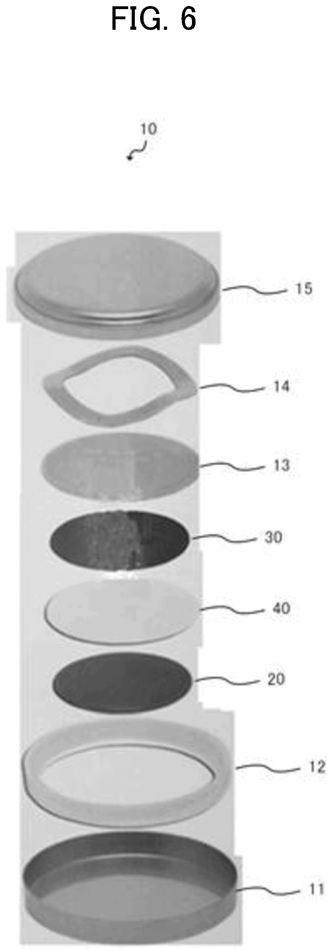

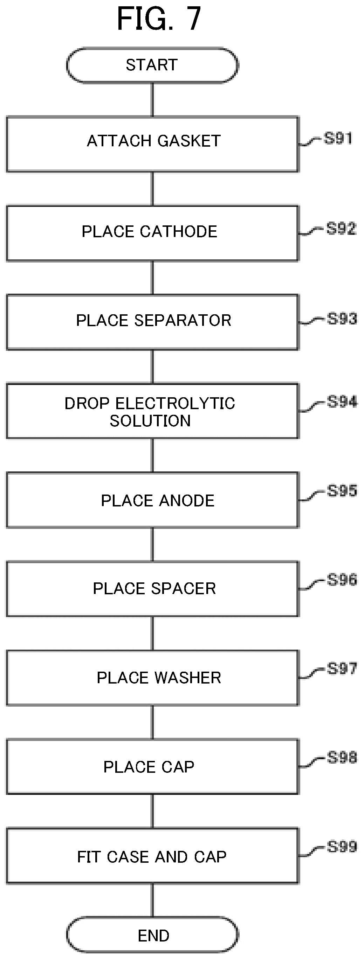

FIG. 6 shows a configuration example of the lithium iron phosphate ion battery 10 according to the present embodiment. FIG. 7 shows an example of an assembly flow of the lithium iron phosphate ion battery 10 according to the present embodiment. In other words, FIGS. 6 and 7 are diagrams illustrating, in detail, the operation of S86 of assembling the lithium iron phosphate ion battery 10 described in FIG. 5.

The lithium iron phosphate ion battery 10 further includes a case 11, a gasket 12, a spacer 13, a washer 14, and a cap 15. The housing 60 is formed by fitting together the case 11 and the cap 15. Before the lithium iron phosphate ion battery 10 is assembled, it is preferable that the cathode 20 and the anode 30 be dried using a vacuum chamber or the like. In this case, for example, the cathode 20 is dried at approximately 110°C for about 8 hours, and the anode 30 is dried at approximately 90°C for about 8 hours. The separator 40 is assumed to have been cut into a predetermined shape.

First, the gasket 12 is attached to the case 11 (S91). Next, the cathode 20 is placed in the case 11 (S92). Next, the separator 40 is placed on the cathode 20 in the case 11 (S93). The separator 40 is, for example, a polyolefin microporous membrane. Next, a predetermined amount of electrolytic solution is dropped onto the separator 40 in the case 11 by a pipette or the like (S94). The electrolytic solution is, for example, an organic electrolytic solution in which approximately 1 mol of a lithium salt (LiPF₆) is dissolved in EC, DMC, and EMC at a weight ratio of 1:1:1. It is preferable that the electrolytic solution be dropped in such that the cathode 20, the anode 30, and the separator 40 are sufficiently immersed in the electrolytic solution.

Next, the anode 30 is placed on the separator 40 containing the electrolytic solution (S95). Next, the spacer 13 is placed on the anode 30 in the case 11 (S96). Next, the washer 14 is placed on the spacer 13 in the case 11 (S97). Next, the cap 15 is placed on the gasket 12 attached to the case 11 (S98). Next, the cap 15 is pressed from above, and the case 11 and the cap 15 are fitted together via the gasket 12 (S99).

As a result, the lithium iron phosphate ion battery 10 can be assembled. It is preferable that the assembly operation of S91 to S99 be performed in an argon atmosphere or a dry atmosphere having a moisture dew point of -50°C or below. The characteristics of the lithium iron phosphate ion battery 10 formed as described above will be described.

### <Examples of characteristics of the lithium iron phosphate ion battery 10>

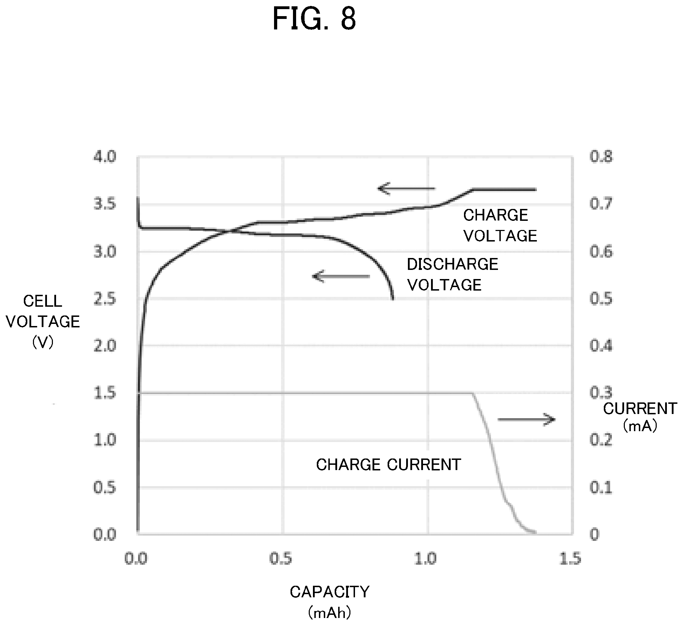

FIG. 8 shows an example of charge-discharge characteristics of the lithium iron phosphate ion battery 10 according to the present embodiment. FIG. 7 shows the charge-discharge characteristics of the lithium iron phosphate ion battery 10 manufactured by the manufacturing flow and assembly flow described with reference to FIGS. 5 to 7. In FIG. 8, the horizontal axis represents the capacity, and the vertical axis represents the cell voltage and the current. From FIG. 8, it can be seen that the charge voltage curve, the discharge voltage curve, and the charge current curve exhibited characteristics comparable to those of a conventional lithium iron phosphate ion battery.

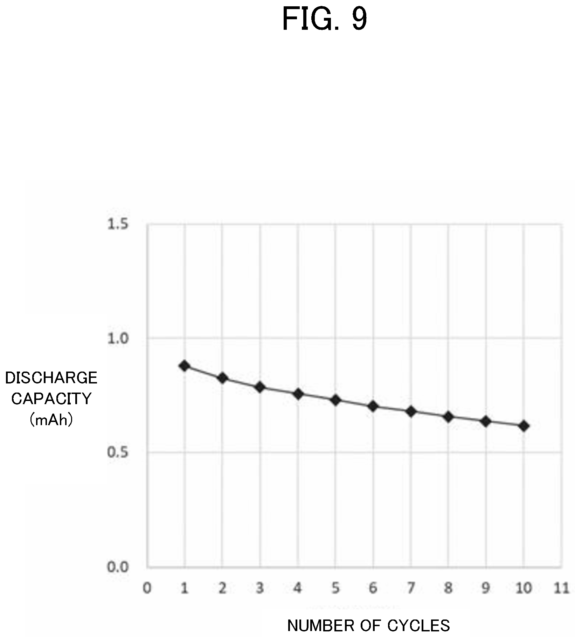

FIG. 9 shows an example of charge-discharge cycle characteristics of the lithium iron phosphate ion battery 10 according to the present embodiment. The charge-discharge cycle characteristics represent the results of plotting the discharge capacity and charge capacity at the end of each cycle, while repeating the charge-discharge cycle as shown in FIG. 8. From FIG. 9, it can be seen that there is no abrupt deterioration in the cycle characteristics, and that the lithium iron phosphate ion battery 10 sufficiently exhibits its function as a rechargeable battery.

An example has been provided in which the lithium iron phosphate ion battery 10 according to the present embodiment described above includes, in the cathode 20, the PGLYD polymer imparted with adhesiveness as a binder, but the present invention is not limited thereto. The lithium iron phosphate ion battery 10 may include, in the anode 30, the PGLYD polymer imparted with adhesiveness as a binder, or may include, in the cathode 20 and the anode 30, the PGLYD polymer imparted with adhesiveness as a binder.

In addition, an example has been described in which the lithium iron phosphate ion battery 10 according to the present embodiment includes 12 wt % of the PGLYD polymer in the cathode 20, but the present invention is not limited thereto. The amount of the PGLYD polymer imparted with adhesiveness is preferably, for example, contained in at least one of the cathode 20 or the anode 30 in an amount of 1 wt % or more and 50 wt % or less based on a weight ratio of the electrode materials. The amount of the PGLYD polymer imparted with adhesiveness may be 5 wt % or more and 15 wt % or less, or may be 7 wt % or more and 12 wt % or less, based on the weight ratio of the electrode materials.

The lithium iron phosphate ion battery 10 according to the present embodiment has been described above as an example involving the manufacture of the coin-type battery, but the present invention is not limited thereto. The lithium iron phosphate ion battery 10 may have another structure, provided that it includes the PGLYD polymer imparted with adhesiveness as a binder in at least one of the cathode or the anode.

The lithium iron phosphate ion battery 10 according to the present embodiment described above is one example of a lithium ion battery, and the technique of using a PGLYD polymer imparted with adhesiveness as a binder is not limited to the lithium iron phosphate ion battery 10. The PGLYD polymer imparted with adhesiveness can be applied to lithium ion batteries configured with various materials, such as a ternary lithium ion batteries that utilize nickel, manganese, and cobalt as cathode material.

The present invention is explained based on the exemplary embodiments. The technical scope of the present invention is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

### [Description of symbols]

10 Lithium iron phosphate ion battery
11 Case
12 Gasket
13 Spacer
14 Washer
15 Cap
20 Cathode
30 Anode
40 Separator
50 Electrolyte
60 Housing
61 Positive terminal
62 Negative terminal

## Claims

1. A method for manufacturing a lithium ion battery comprising the steps of:
forming a polyglycidol (PGLYD) polymer imparted with adhesiveness by forming urethane bonds in a PGLYD polymer;
forming a cathode that includes (i) a cathode active material and (ii) amorphous carbon or carbon fibers;
forming an anode that includes (i) an anode active material and (ii) amorphous carbon or carbon fibers; and
enclosing the cathode, the anode, and a predetermined electrolyte in a predetermined container and hermetically sealing the container, wherein at least one of the cathode or the anode includes, as a binder, the PGLYD polymer imparted with adhesiveness.

2. The method for manufacturing the lithium ion battery according to claim 1, wherein the forming the cathode includes: forming the cathode by applying to a substrate a cathode slurry containing cathode material that includes (i) a cathode active material, (ii) amorphous carbon or carbon fibers, and (iii) the PGLYD polymer imparted with adhesiveness, and drying the cathode slurry, and
the cathode material includes 1 wt % or more and 50 wt % or less of the PGLYD polymer.

3. The method for manufacturing the lithium ion battery according to claim 1 or 2, wherein the forming the anode includes: forming the anode by applying to a substrate an anode slurry containing anode material that includes (i) an anode active material, (ii) amorphous carbon or carbon fibers, and (iii) the PGLYD polymer imparted with adhesiveness, and drying the anode slurry, and
the anode material includes 1 wt % or more and 50 wt % or less of the PGLYD polymer.

4. A lithium ion battery comprising:
a cathode that includes (i) a cathode material and (ii) amorphous carbon or carbon fibers;
an anode that includes (i) an anode active material and (ii) amorphous carbon or carbon fibers; and
an electrolyte, wherein at least one of the cathode or the anode includes a PGLYD polymer imparted with adhesiveness through urethane bonding.
